# EUROPEAN PATENT APPLICATION

(11) **EP 4 064 165 A1**
(43) Date of publication of application: **28.09.2022**
(21) Application number: 22163701.0
(22) Date of filing: 23.03.2022
(51) Int. Cl.: G06Q 30/02, G06Q 30/06

(54) **ARTIFICIAL INTELLIGENCE AGENTS FOR PREDICTIVE SEARCHING**

(30) Priority: 26.03.2021 US 202117214242
(71) Applicant: eBay, Inc., San Jose, CA 95125 (US)
(72) Inventor: LANCEWICKI, Tomer, San Jose, CA, 95125 (US); HEWAVITHARANA, Sanjika, San Jose, CA, 95125 (US); SARAF, Bindia, San Jose, CA, 95125 (US); JUNEJA, Vanuj, San Jose, CA, 95125 (US); KARWA, Dhaval D, San Jose, CA, 95125 (US)
(74) Representative: Müller-Boré & Partner Patentanwälte PartG mbB

(57) **Abstract**

Technologies are shown for artificial intelligence agents for predicting items of interest utilizing multiple data sources, such as historical user behavior, item wear profiles, inventory data and social network data. User models to the multiple sources of data to predict an item of interest to the user. Search requests pertaining to the predicted item can be generated and submitted to electronic commerce platforms and results responsive to the first set of search requests pertaining to the first predicted item received. In one aspect, one or more of the search results can be selected for display to the user. A search result selected by the user can be received and a purchase transaction committed. In another aspect, the agent is authorized to autonomously execute a purchase transaction on a selected one of the search results. Different model types can be utilized for predicting different types of items.

## Description

### BACKGROUND

The disclosed technology relates to searching for items of interest to a user. Currently, a user typically determines that they have an item that they wish to purchase and then searches for the item on one or more eCommerce platforms. When the user finds a satisfactory offer on an eCommerce platform, the user can execute a purchase transaction for the item.

This approach requires a user to recognize their own needs or wants. The user may, for example, be influenced by advertising, popular culture, their social group or life experience. A user may not recognize that they have an interest in an item that they haven't encountered.

In addition, to search for an item for purchase, the user typically formulates search queries on eCommerce platforms, reviews the offerings returned by the eCommerce platforms and then selects an offer to execute a purchase transaction. This process can be time consuming. Some items, such as toiletries or groceries, may not merit the investment of time needed to search and identify an item for purchase.

It is with respect to these and other considerations that the disclosure made herein is presented.

### SUMMARY

The disclosed technology is generally directed toward artificial intelligence (AI) agents that predict a user's items of specific interest to the individual user and make recommendations or purchases based on a predicted need. For example, a user's data from a fitness app is utilized along with wear data for the running shoes worn by the user to predict when the running shoes are worn out and automatically purchase or recommend a replacement.

One aspect of the disclosed technology involves predicting a user's items of interest based on an array of data sources, such as user behavior data, social network data, and item wear or consumption data. A wide variety of data sources can be used, such as historical location and activity data, social network, search history data, purchase history, style graphing or financial, in order to prediction an item that may be of interest to a user.

Another aspect of the disclosed technology is the use of one or more user models that can be applied to data sources in order to predict items of interest. These user models can be customized for a specific user by modifying the user model based on, for example, user purchase activity or feedback. For example, a standard model can be provided for a user that, over time and with additional user behavior data, e.g. the user's selections and feedback, the model can be refined to more accurately predict the user's interests.

Yet another aspect of the disclosed technology is the user of different types of models for different types of items. For example, a type of user model configured for exercise can be applied to predict a user's interest in sporting goods while another type of user model configured to clothing can be applied to predict a user's interest in clothing. Examples of other types of models that can be utilized include dietary, home and garden and tourism.

In certain simplified examples of the disclosed technologies, a method, system or computer readable medium for automatic generation of predictions for items of interest to a user involves obtaining historical user behavior data, predictive data and status data, applying a first user model to the historical user behavior data, predictive data and status data to predict a first item of interest to the user. These examples also include generating a first set of search requests pertaining to the first predicted item; submitting each of the first set of search requests to one of a plurality of electronic commerce platforms and receiving a first set of search results responsive to the first set of search requests pertaining to the first predicted item; and selecting at least one of the first set of received search results for the first predicted item.

In other examples of the disclosed technology, the predictive data includes an item wear profile corresponding to an item and the operation of applying a first user model to the historical user behavior data, predictive data and status data to predict a first item of interest to the user involves applying the first user model to the historical user behavior data and the item wear profile to predict the first item of interest to the user.

In still other examples, the status data includes user preference data and the operation of generating the first set of search requests pertaining to the predicted item involves generating a first set of search requests pertaining to the predicted item based on one or more parameters from the user preference data.

In yet other examples, the user preference data includes a user authorization to automatically to purchase the predicted item these examples include searching the user preference data for the user authorization to automatically purchase the predicted item; and if the user authorization to automatically purchase the predicted item is founds, automatically committing a purchase transaction for the selected one of the search results for the predicted item.

In certain examples, the operation of obtaining historical user behavior data, predictive data and status data includes obtaining search data and social network data for the user and the operation of applying a first user model to the historical user behavior data, predictive data and status data to predict a first item of interest to the user involves applying a first user model to the historical user behavior data, search data and social network data to predict a first item of interest to the user.

In some particular examples, the operation of obtaining historical user behavior data, predictive data and status data includes obtaining inventory data for the user and the step includes generating a style graph based on a plurality of the historical user behavior data, the inventory data, search data and social network data and the operation of applying a first user model to the historical user behavior data, predictive data and status data to predict a first item of interest to the user involves applying a first user model to the style graph and the plurality of the historical user behavior data, the inventory data, search data and social network data to predict a first item of interest to the user.

In some other examples, the operation of selecting at least one of the first set of received search results for the first predicted item involves selecting one the first set of received search results for the first predicted item, providing for display on a user client the selected one of the first set of received search results for the first predicted item, receiving a user selection of one of the selected one of the first set of received search results, and committing a purchase transaction for the user selected one of the first set of search results for the first predicted item.

Some other examples of the disclosed technology include modifying the first user model based on one or more of received user selection, user feedback, and updated historical user behavior data.

In some further examples, the first user model involves a first type of user model and these examples include applying a second user model comprising a second type of user model to the historical user behavior data, predictive data and status data to predict a second item of interest to the user, generating a second set of search requests pertaining to the second predicted item, submitting each of the second set of search requests to one of the plurality of electronic commerce platforms, receiving a second set of search results responsive to the second set of search requests, and selecting at least one of the second set of received search results for the second predicted item.

It should be appreciated that the above-described subject matter may also be implemented as a computer-controlled apparatus, a computer process, a computing system, or as an article of manufacture such as a computer-readable medium. These and various other features will be apparent from a reading of the following Detailed Description and a review of the associated drawings. This Summary is provided to introduce a selection of concepts in a simplified form that are further described below in the Detailed Description.

This Summary is not intended to identify key features or essential features of the claimed subject matter, nor is it intended that this Summary be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

The Detailed Description is described with reference to the accompanying figures. In the figures, the left-most digit(s) of a reference number identifies the figure in which the reference number first appears. The same reference numbers in different figures indicate similar or identical items.
FIGURE 1A is an architectural diagram illustrating one example of an environment for predictive searching in accordance with the disclosed technology;
FIGURE 1B is a functional block diagram illustrating one example of a multiple AI agents and disparate data sources for predictive searching in accordance with the disclosed technology;
FIGURE 2 is a data architecture diagram showing an illustrative example of message and data exchanges for predictive searching in accordance with the disclosed technology;
FIGURE 3A is a data architecture diagram showing message and data exchanges for a specific illustrative example of message and data exchanges for predictive searching in accordance with the disclosed technology where an item is automatically purchased;
FIGURE 3B is a schematic diagram illustrating a user interface of a user client device displaying search results based on a user's predicted need to replace running shoes in accordance with the disclosed technology where a buyer user confirms purchase of an item;
FIGURE 4A is a control flow diagram showing an illustrative example of a process for predictive searching in accordance with the disclosed technology;
FIGURE 4B is a control flow diagram showing additional process operations for an illustrative example of a process for predictive searching involving a user selection in accordance with the disclosed technology;
FIGURE 4C is a control flow diagram showing additional process operations for an illustrative example of a process for predictive searching involving automatic purchasing of items in accordance with the disclosed technology;
FIGURE 4D is a control flow diagram showing a specific illustrative example of a process for predictive searching involving item consumption data in accordance with the disclosed technology;
FIGURE 4E is a control flow diagram showing a specific illustrative example of a process for predictive searching involving social network data in accordance with the disclosed technology;
FIGURE 4F is a control flow diagram showing another specific illustrative example of a process for predictive searching involving a style graph in accordance with the disclosed technology;
FIGURE 4G is a control flow diagram showing an illustrative example of a process for predictive searching involving multiple different types of user models in accordance with the disclosed technology;
FIGURE 4H is a control flow diagram showing an illustrative example of a process for predictive searching involving modification of a user model in accordance with the disclosed technology;
FIGURE 41 is a control flow diagram showing a specific illustrative example of a process for predictive searching involving object recognition of items in a user's environment in accordance with the disclosed technology;

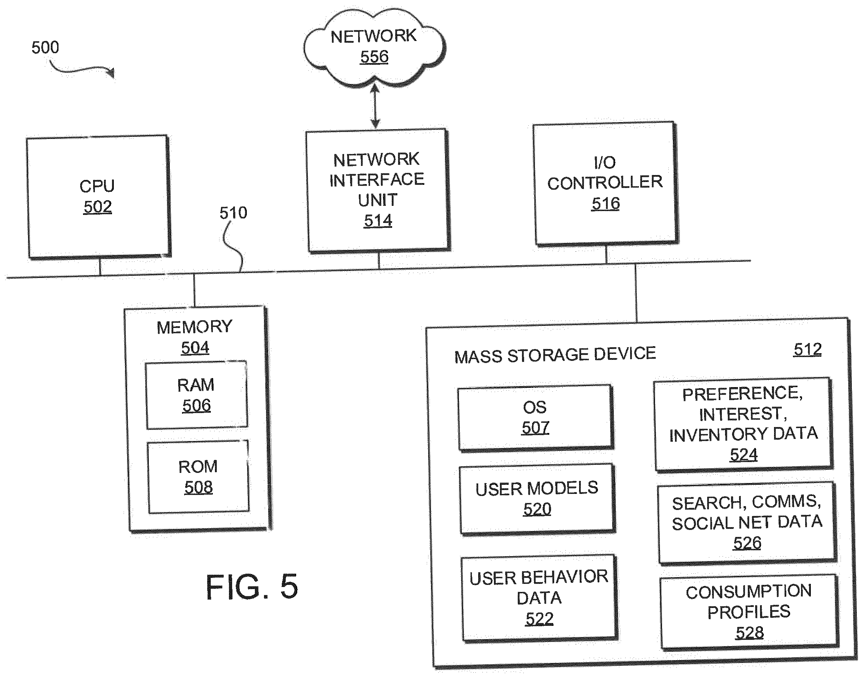

FIGURE 5 is a computer architecture diagram illustrating an illustrative computer hardware and software architecture for a computing system capable of implementing aspects of the techniques and technologies presented herein;

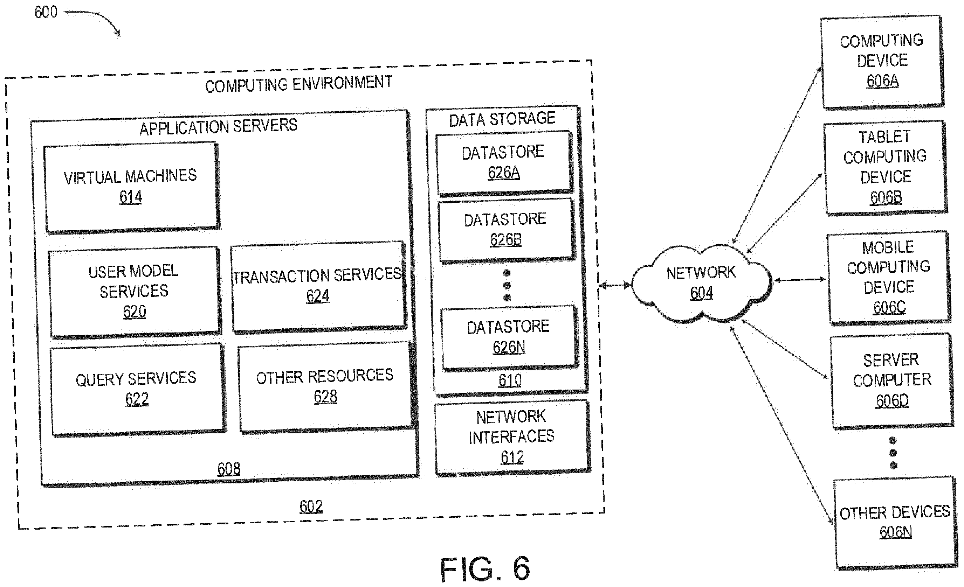

FIGURE 6 is a diagram illustrating a distributed computing environment capable of implementing aspects of the techniques and technologies presented herein; and

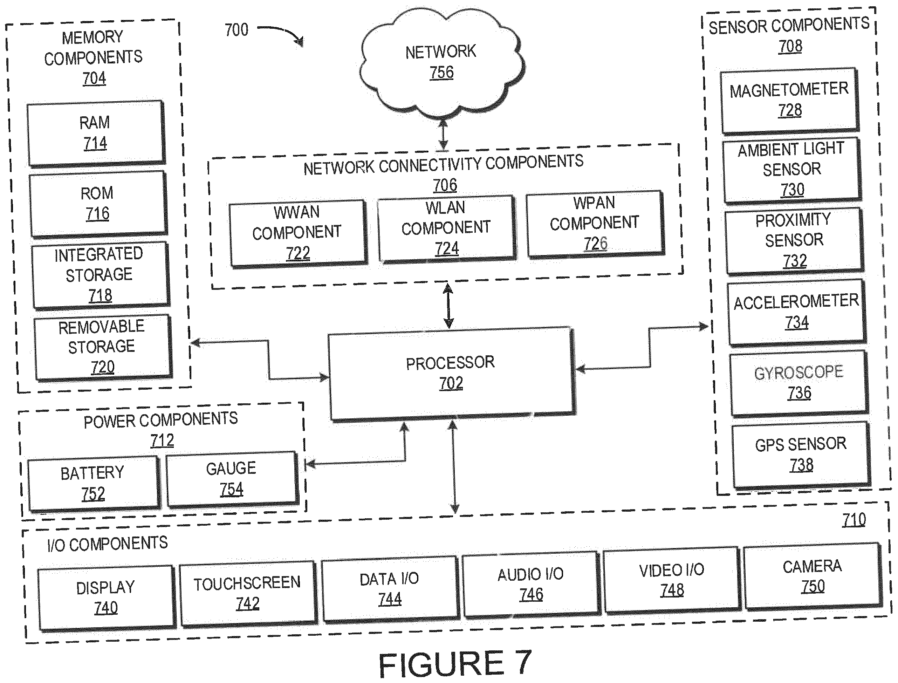

FIGURE 7 is a computer architecture diagram illustrating a computing device architecture for a computing device capable of implementing aspects of the techniques and technologies presented herein.

### DETAILED DESCRIPTION

The following Detailed Description describes technologies for predicting items that the user will likely need or want using Artificial Intelligence (AI) agents to predict the items that the user will likely need or want and to search for the predicted items for the user. One or more AI agents can be utilized where different agents utilize different user models to make predictions.

Certain examples of the disclosed technology that automatically predict items of interest to the user without the user having to interact with a user interface to search for items of interest and browse search results to identify items of interest. Because these examples of the disclosed technology may reduce the user interactions involved in a user searching for items of interest, they may offer a technical advantage of improved efficiency for use of computer and network resources in identifying items of interest to a user.

Examples of the disclosed technology can predict items of interest to the user based on multiple data sources such as user behavior data, predictive data, status data, style graphs, search data and social network data and applying one or more user models to the multiple data sources that may predict items of interest that a user may not have been able to identify with their own item searches or with reduced searching, which provides the technical advantage of improvements to user interaction with a system. Other examples of the disclosed technology can automatically modify user models based on received user selection, user feedback, and updated historical user behavior data to customize the user models for a particular user, which provides the technical advantage of further improvements to user interaction with a system.

Particular examples of the disclosed technology can apply different types of user models to the multiple sources of data to predict different types of items of interest to a user, which can offer a technical advantage of yet further improvements to user interaction with a system.

Particular examples of the disclosed technology can automatically execute a purchase transaction for an item of interest. Because these examples of the disclosed technology can automatically execute a purchase transaction for a predicted item without exposing the transaction to additional interactions that could be intercepted by malicious actors, the disclosed technology can offer a technical advantage of improved security for the purchase transaction. In addition, because the automatic execution of the purchase transaction reduces the user interactions for the purchase transaction, the disclosed technology can offer a technical advantage of additional improved efficiency for use of computer and network resources in purchase transactions.

Other technical effects other than those mentioned herein can also be realized from implementation of the technologies disclosed herein.

As will be described in more detail herein, it can be appreciated that implementations of the techniques and technologies described herein may include the use of solid state circuits, digital logic circuits, computer components, and/or software executing on one or more input devices. Signals described herein may include analog and/or digital signals for communicating a changed state of the data file or other information pertaining to the data file.

While the subject matter described herein is presented in the general context of program modules that execute in conjunction with the execution of an operating system and application programs on a computer system, those skilled in the art will recognize that other implementations may be performed in combination with other types of program modules. Generally, program modules include routines, programs, components, data structures, and other types of structures that perform particular tasks or implement particular abstract data types. Moreover, those skilled in the art will appreciate that the subject matter described herein may be practiced with other computer system configurations, including multiprocessor systems, mainframe computers, microprocessor-based or programmable consumer electronics, minicomputers, hand-held devices, and the like.

In the following detailed description, references are made to the accompanying drawings that form a part hereof, and in which are shown by way of illustration specific configurations or examples. Referring now to the drawings, in which like numerals represent like elements throughout the several figures, aspects of a computing system, computer-readable storage medium, and computer-implemented methodologies for automatic generation of predictions for items of interest will be described. As will be described in more detail below with respect to the figures, there are a number of applications and services that may embody the functionality and techniques described herein.

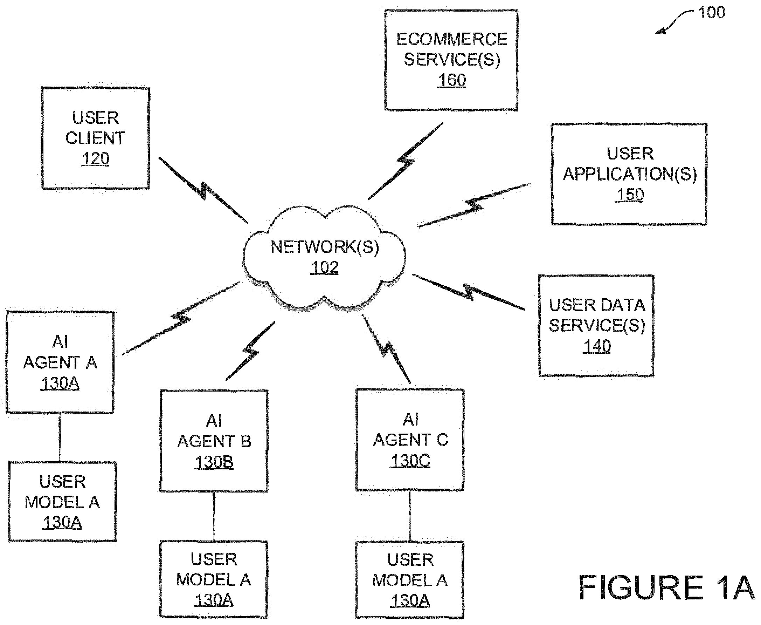

FIGURE 1A is an architectural diagram illustrating one example of an environment 100 for predictive searching in accordance with the disclosed technology. In environment 100, AI agents 130 make predictions regarding a user's needs or interests and provide recommendations or purchase confirmations to user client 120. In this example, each of AI agents 130 utilizes a corresponding user model 132 to predict the user's needs. The user models 132 can be based on different profiles to produce predictions relevant to the profile, e.g. fitness profile, fashion profile, home and garden profile, or dietary profile.

User client device 120 and AI agents 130 are in communication with network 102. User data services 140 and user applications 150 can communicate with one another and AI agents 130 through network 102 though user data services 140 and user applications can reside on user client device 120 or in servers or distributed platforms. eCommerce services 160 can communicate with user client 120 and AI agents 130 through network 102.

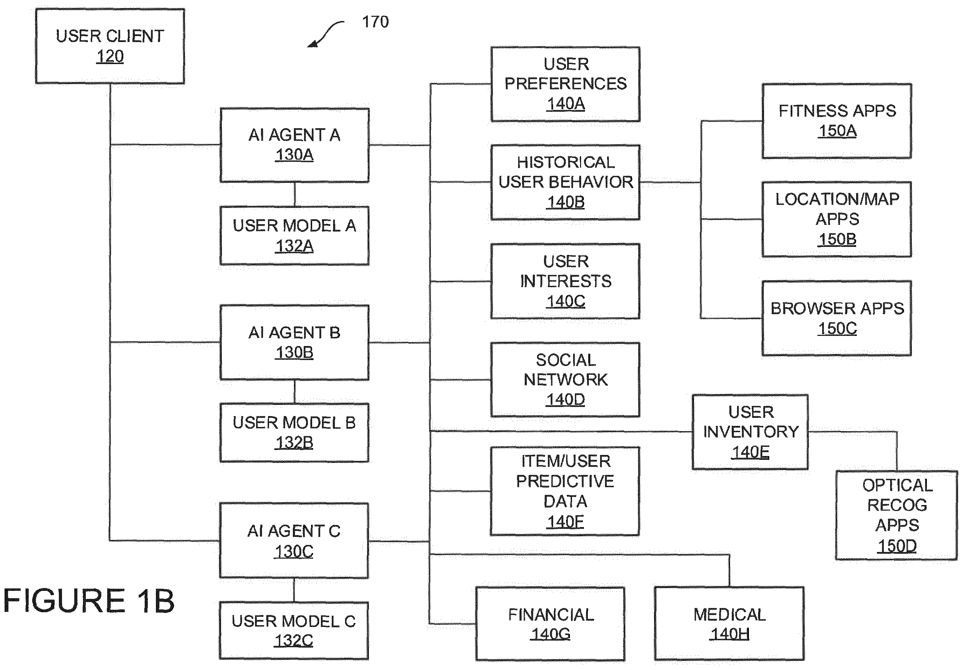

FIGURE 1B is a functional block diagram illustrating one example of a hierarchy 170 of multiple AI agents 130 interconnected to disparate data sources 140 for predictive searching in accordance with the disclosed technology. Data sources 140 represent a wide array of different data inputs 140 that can be utilized by the agents 130 as inputs to user models 132 to generate predictions for the user's interests or needs. For example, user preferences 140A can include user determined preference data regarding pricing (e.g. low, medium, high), brands, presentation (e.g. number of options presented), whether an agent is authorized to automatically purchase items for the user as well as purchase price limits for the authorization.

Historical user behavior data 140B can, for example, include tracking and activity data from fitness applications 150A (e.g. distances run, cycled or swum), location data from location or mapping applications or search and browsing data from browsing applications 150C, which can reside on user client 120 or on other platforms in communication with user client 120.

User interests data 140C can, for example, include user defined interests, interests derived from search histories, interests derived from purchase histories, or interests identified from social networking communications. Social network data 140D can include, for example, trends or events identified from social network traffic or profiles for individuals from the user's social networks.

User inventory data 140E can include data about items that the user has in the users environment. For example, inventory data 140E can include data obtained through user purchase data, proximity sensors, such as optical object recognition application 150D, or audio inputs.

Item or user predictive data 140F can include, for example, data regarding wear or aging profiles for items or data regarding the user's past frequency for replacement of items. For example, a wear profile for a pair of shoes owned by the user can be included in predictive data 140F. Profiles for expiration of perishable goods and consumption profiles for food, paper goods or other consumables are other examples of predictive data 140F that can be utilized by user models 132 to generate predictions of user's needs or interests.

Further examples of data that can be used by user models 132 to generate predictions can include financial data 140G (e.g. credit card or bank statements) and medical data 140H (e.g. prescriptions or dietary requirements). A wide array of user related data can be utilized with respect to the disclosed technology.

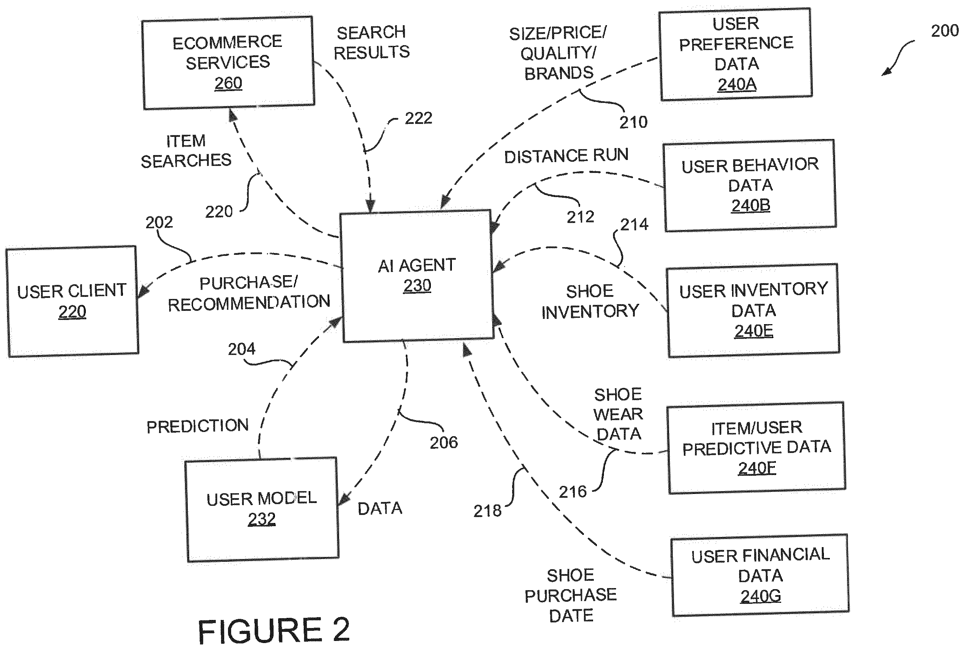

FIGURE 2 is a data architecture diagram showing an illustrative example of message and data exchanges 200 relating to a predictions regarding running shoes for a user for predictive searching in accordance with the disclosed technology.

In this example, AI agent 230 utilizes a user model 232 that relates to shoe usage. At 212, AI agent 230 obtains data regarding a distance run by the user from user behavior data 240B. The distance run can be obtained by a tracking application, such as a running or fitness application, which may reside on user client 220 or on another platform in communication with user client 220.

At 214, AI agent 230 obtains inventory data regarding shoes owned by the user from user inventory 140E and, at 216, a shoe wear profile (e.g. a wear profile for a particular type or brand of shoe) from item/user predictive data 240F and, at 218, a shoe purchase date from financial data 240G.

Note that the data sources and types described above are exemplary and are not intended to limit the scope of the disclosed technology. Fewer, more or different data sources can be utilized to generate predictions. Examples of other data that can be utilized for predictions in this example can include user weight, dietary and health data.

At 206, AI agent 230 applies model 232 to the data obtained and user model 232 may utilize the data to generate a prediction, at 204, that the user needs to replace their running shoes. In one example, if user model 232 generates a prediction that the user's shoes need to be replaced, then, at 210, AI agent 230 can obtain the user's preferences regarding shoe size, price, quality and brands from user preference data 240A. Note that the user preference data 240A can be expressly defined by a user or inferred from past purchases by the user.

The user's preference data is utilized to generate item searches 220 for replacement shoes that are submitted to eCommerce services 260. The AI agent 230 processes the shoe search results 222 from eCommerce services 260 (e.g. brand and price) to identify offers for replacement shoes to present or recommend that are sent to the user client 220, at 202, for presentation to a user. In some implementations, AI agent 230 can automatically execute a purchase transaction for the replacement shoes based on the search results 222.

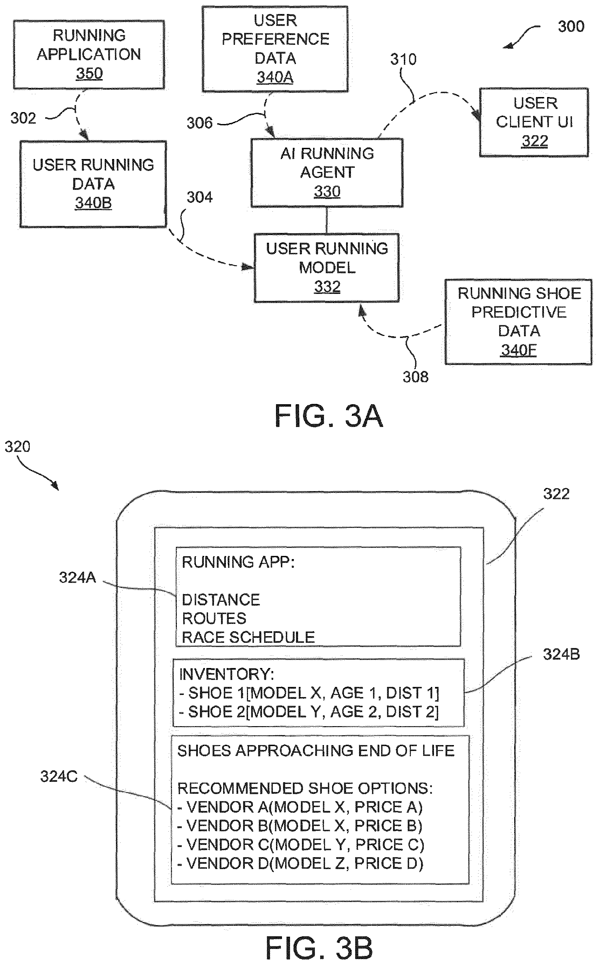

FIGURE 3A is a data architecture diagram showing a simplified example of message and data exchanges 300 relating to generating a prediction regarding running shoes in accordance with the disclosed technology. In this example, run tracking data 302 from running application 350 is stored in user running data store 340B and, at 304, the stored tracking data is provided to user running model 332. Other types of user behavior data relating to other activities, such as cycling, rowing, dancing or walking data can be used in other contexts in combination with a user model configured for the particular activity.

A shoe wear profile 308 is provided to AI running model 332 from running shoe predictive data 340F. In this example, AI running model 332 applies the shoe wear profile 308 for the user's shoes to the user running data 304 to predict whether the user's shoes may be in need of replacement.

If user running model 332 predicts that the user's shoes are in need of replacement, then AI running agent can utilize user preference data 306 from user preference data store 340A to generate item searches for running shoes of the user's size and preferred brand and model that can be submitted to eCommerce platforms to obtain purchase options that are provided, at 310, to user client user interface (UI) 322.

Alternatively, if the user has authorized in user preference data 340A for AI running agent 330 to autonomously purchase replacement shoes, then agent 330 will execute a purchase transaction on behalf of the user to purchase the shoes. The user preference data 340A can include price constraints on the purchase authority of agent 330, which can be used to constrain the purchases made by agent 330.

FIGURE 3B is a schematic diagram illustrating an example of a user interface 322 of a user client device 320 displaying search results based on predicted need for a user to replace running shoes in accordance with the disclosed technology where a buyer user confirms purchase of an item.

In this example, display region 324A presents data collected by a running application that includes a distance run, routes run and a race schedule. Display region 324B presents inventory data regarding running shoes owned by the user that includes a model, age and distance run for each shoe. Display regions 324C presents a message indicating that the shoes are reaching the end of their useful life and presents four different recommended shoe options based on search results obtained from eCommerce platforms that include a vendor for each option along with the model and price offered by the vendor. The user can then select an option for purchase by, for example, touching the option within display region 324C of UI 322.

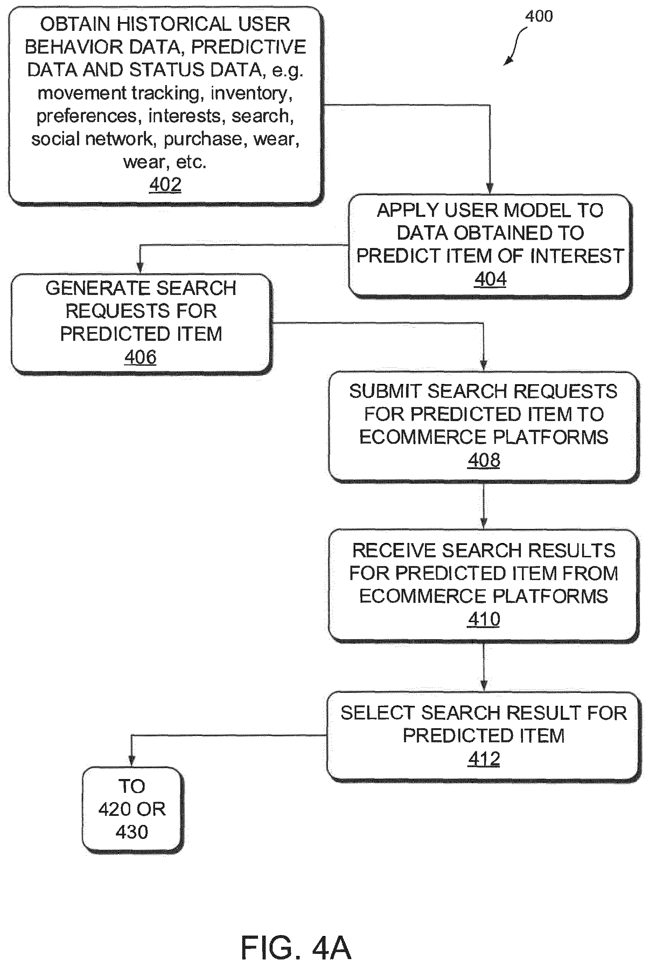

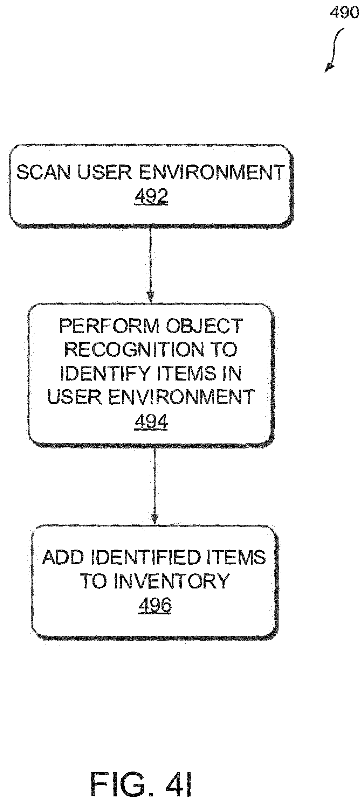

FIGURE 4A is a control flow diagram showing an illustrative example of a process 400 for predictive searching in accordance with the disclosed technology. At 402, multiple data sources, such as historical user behavior data, predictive data and status data, are obtained.

Historical user behavior data can, for example, include movement and location tracking, user search data and user communications data that tend to be updated frequently. Predictive data can, for example, include data relating to the characteristics of items, such as wear profiles, consumption profiles, and spoilage and expiration data for items in the user's inventory data. Status data can, for example, include user preference data, inventory, purchase or finance data that tends to be relatively static or slowly changing data.

At 404, one or more user models can be applied to the data obtained in order to predict an item of interest to the user. At 406, one or more search requests for the predicted item are generated and, at 408, the search requests are submitted to one or more eCommerce platforms, e.g. on-line marketplaces. At 410, the search results from the eCommerce platforms are received.

At 412, one or more search results for the predicted item are selected for presentation to the user, at 420, or a search result is selected for autonomous purchase, at 430. The selection of one or more search results can, in some examples, be based upon user defined preferences, such as price, brand or color.

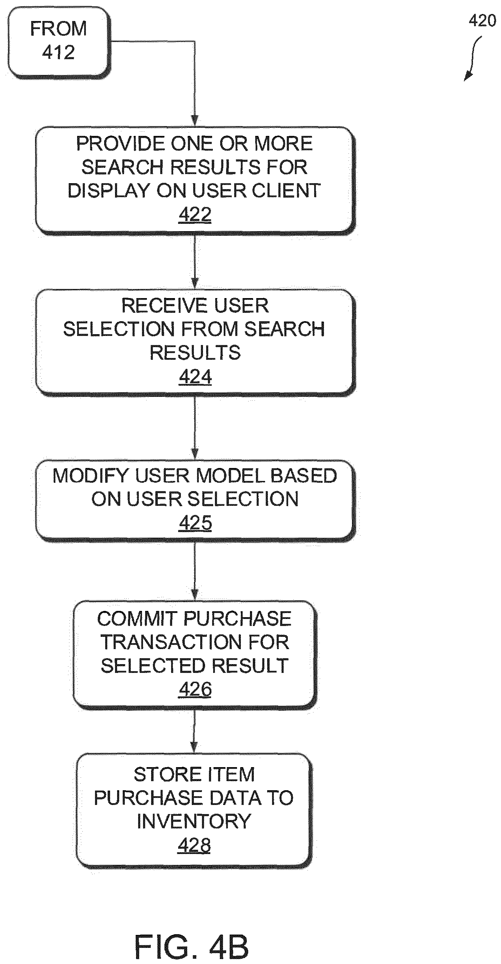

FIGURE 4B is a control flow diagram showing additional process operations 420 for an illustrative example of a process for predictive searching involving a user selection in accordance with the disclosed technology. At 422, the selected one or more search results is provided for display to the user on the user client. At 424, a user selection of one of the search results is received.

At 425, the user model utilized to generate the predicted item can be modified to refine its predictions based on the user's selection. For example, a standardized running model may be initially provided for a user. Over time, the standardized running model can be modified based on the user's selections, feedback, behavior or other inputs to customize the model for the individual user.

At 426, a purchase transaction is committed for the search result selected by the user. At 428, the item purchase data, e.g. model, price, date, etc., can be stored in inventory for the user.

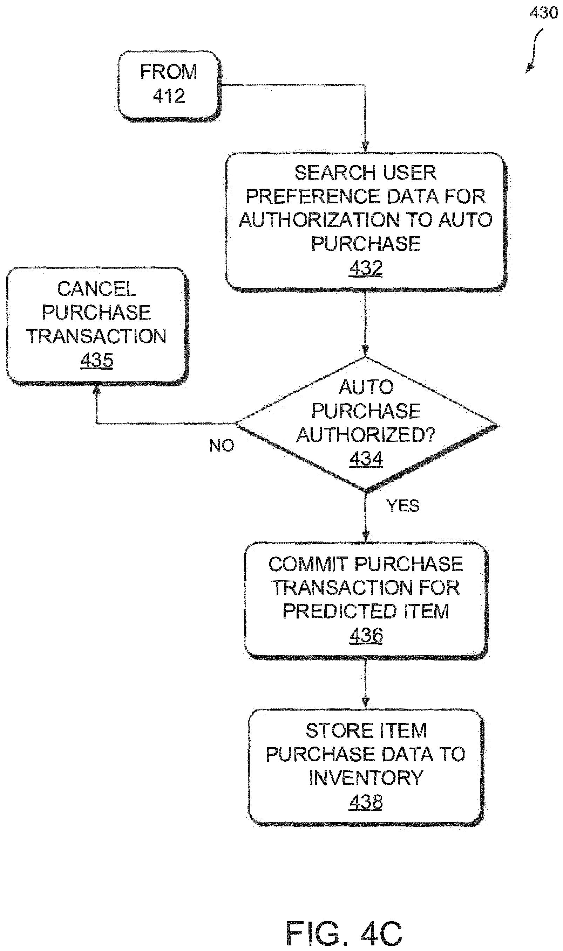

FIGURE 4C is a control flow diagram showing additional process operations 430 for an illustrative example of a process for predictive searching involving automatic purchasing of items in accordance with the disclosed technology. At 432, user preference data is searched to determine if the AI agent is authorized to autonomously make purchases for the predicted items. If the agent is no authorized or does not have sufficient purchase authority to purchase the predicted item, then control branches at 434 to 435 and the purchase transaction is cancelled.

If the agent does have sufficient authority to purchase the predicted item, then control branches at 434 to 436 to commit the purchase transaction for the predicted item. At 438, the item purchase data is stored in inventory.

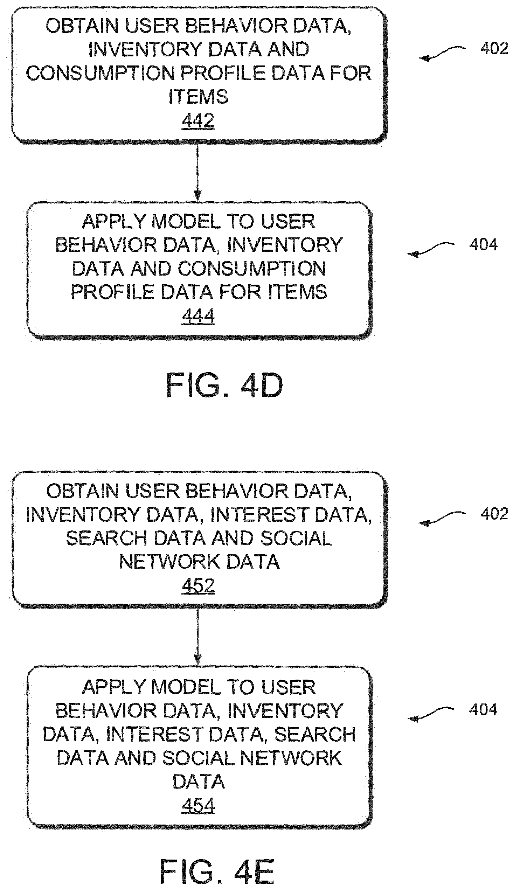

Automatic purchasing may, for example, be particularly useful for consumable items, such as food, paper products or diapers. Based on a user model for consumption, expiration or other factors, an AI user model can predict that an item needs to be replenished and autonomously purchase the item. FIGURE 4D represents an example of operational steps that may be utilized in the context of consumable items.

FIGURE 4D is a control flow diagram showing a specific illustrative example of process steps for predictive searching involving item consumption data in accordance with the disclosed technology. In this example, operational step 402 of FIGURE 4A takes the form of operation step 442, which obtains user behavior data, inventory data, and consumption profile data for one or more items. Operational step 404 of FIGURE 4A takes the form of operation step 444, wherein a user model is applied to the user behavior data, inventory data, and consumption profile data in order to generate an item prediction.

Item predictions can also be generated based on data regarding a user's expressed interests, e.g. sports, clothing, travel, as well as the user's search data and data from the user's social network, e.g. items that have been discussed on-line by the user's friend contacts, e.g. clothing, food or music. FIGURE 4E is a control flow diagram showing a specific illustrative example of process steps for predictive searching involving social network data in accordance with the disclosed technology.

In this example, operational step 402 of FIGURE 4A takes the form of operation step 452, which obtains user behavior data, inventory data, on-line search data and social network data for one or more items. Operational step 404 of FIGURE 4A takes the form of operation step 454, wherein a user model is applied to the user behavior data, inventory data, on-line search data and social network data in order to generate an item prediction.

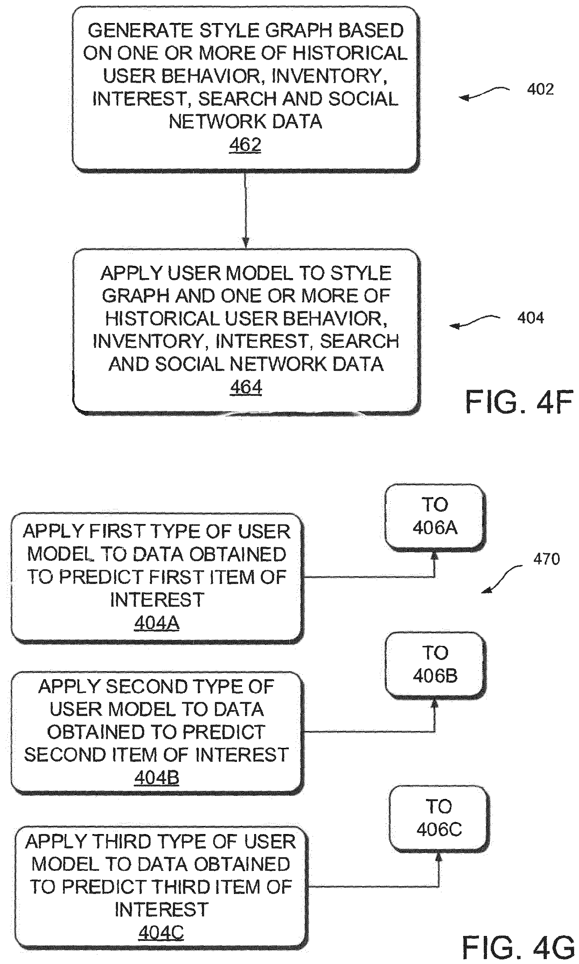

Item predictions can also be generated based on style graphing for a user that can be based on data regarding a user's expressed interests, e.g. sports, clothing, travel, as well as the user's search data and data from the user's social network. For example, a style graph can be produced from an inventory of the user's clothing, furniture or art that can be used to predict other items that are consistent with the user's style, e.g. modern, classical or gothic. FIGURE 4F is a control flow diagram showing another specific illustrative example of processing steps for predictive searching involving a style graph in accordance with the disclosed technology.

In this style graph based example, operational step 402 of FIGURE 4A takes the form of operation step 462, which generates a style graph for the user based on user behavior data, inventory data, on-line search data and social network data for one or more items. Operational step 404 of FIGURE 4A takes the form of operation step 464, wherein a user model is applied to the style graph in addition to the user behavior data, inventory data, on-line search data and social network data in order to generate an item prediction.

When generating predictions for items of interest to a user, using specific types of user models that are configured for particular activities or types of items may produce better predictions with respect to different types of activities or items. For example, an AI agent applying a user model configured for cycling may produce better predictions for cycling items than an AI agent applying a user model configured for clothing fashions and vice-versa.

The different types of user models may also rely on different data sources to produce predictions. For example, a cycling user model may utilize movement data obtained from a cycling tracking application and wear profile data for cycling equipment to generate item predictions. In contrast, a clothing fashion user model may utilize user inventory data, search data and social networking data to generate predicted items of interest. Multiple user models of different types can be utilized to predict different types of items.

FIGURE 4G is a control flow diagram showing an illustrative example of a process for predictive searching involving multiple different types of user models in accordance with the disclosed technology. In this example, an AI agent applies a first type of user model to data to predict a first item of interest, another AI agent applies a second type of user model to data to predict a second item of interest, and yet another AI agent applies a third type of user model to predict a third item of interest.

As noted above, user models can be modified over time to more accurately predict items of interest for a user. For example, a cycling user model can be modified based on the user's selections, feedback and updated user behavior data to refine a cycling model for the user. This may result in the cycling model adapting to changes in the user's cycling habits such as increased riding with increased fitness or decreased riding due to poor weather.

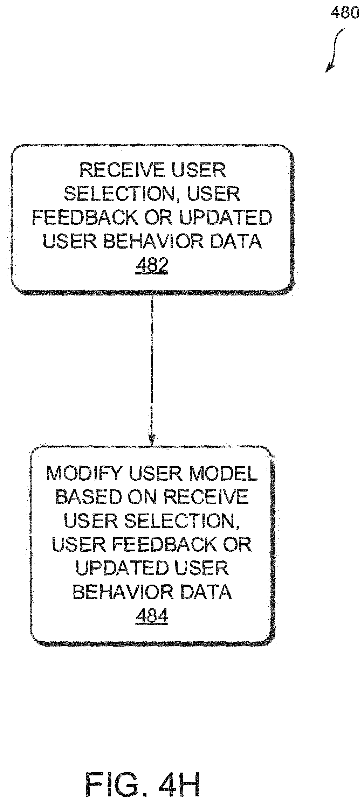

FIGURE 4H is a control flow diagram showing an illustrative example of a process 480 for modification of a user model for predictive searching in accordance with the disclosed technology. At 482, in this example, the user's selections, user feedback and updated user behavior data is received. At 484, the received data is utilized to modify the user model. This process can be applied to different types of user models to refine the models for different types of user interest or activities.

As noted above, item predictions can be based on user inventory data. For example, a camera in the user's phone can optically scan the user's environment and use object recognition to identify items in the user's environment. The identified items can then be stored in the user's inventory data and utilized to make item predictions.

FIGURE 41 is a control flow diagram showing a specific illustrative example of a process 490 for predictive searching involving object recognition of items in a user's environment in accordance with the disclosed technology. At 492, the user's environment is optically scanned, e.g. using a camera in a user client device such as a phone or tablet. At 494, object recognition is performed on the optical scan data to identify one or more items. At 496, the items identified from the optical scan data are added to the user's inventory data.

It should be appreciated that a variety of different instrumentalities and methodologies can be utilized to establish wireless communication as well as collect, exchange and display sensor and message data without departing from the teachings of the disclosed technology. The disclosed technology provides a high degree of flexibility and variation in the configuration of implementations without departing from the teachings of the present disclosure.

The present techniques may involve operations occurring in one or more machines. As used herein, "machine" means physical data-storage and processing hardware programed with instructions to perform specialized computing operations. It is to be understood that two or more different machines may share hardware components. For example, the same integrated circuit may be part of two or more different machines.

One of ordinary skill in the art will recognize that a wide variety of approaches may be utilized and combined with the present approach to automatic generation of predictions for items of interest. The specific examples of different aspects of automatic generation of predictions for items of interest described herein are illustrative and are not intended to limit the scope of the techniques shown.

### Computer Architectures for Automatic Predictions of Items of Interest

Note that at least parts of processes 400, 420, 430, 480 and 490 of FIGURES 4A-I and other processes and operations pertaining to predictive searching described herein may be implemented in one or more servers, such as computer environment 600 in FIGURE 6, or the cloud, and data defining the results of user control input signals translated or interpreted as discussed herein may be communicated to a user device for display. Alternatively, the predictive searching processes may be implemented in a client device. In still other examples, some operations may be implemented in one set of computing resources, such as servers, and other steps may be implemented in other computing resources, such as a client device.

It should be understood that the methods described herein can be ended at any time and need not be performed in their entireties. Some or all operations of the methods described herein, and/or substantially equivalent operations, can be performed by execution of computer-readable instructions included on a computer-storage media, as defined below. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like.

Thus, it should be appreciated that the logical operations described herein are implemented (1) as a sequence of computer implemented acts or program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states, operations, structural devices, acts, or modules. These operations, structural devices, acts, and modules may be implemented in software, in firmware, in special purpose digital logic, and any combination thereof.

As described herein, in conjunction with the FIGURES described herein, the operations of the routines (e.g. processes 400, 420, 430, 480 and 490 of FIGURES 4A-I) are described herein as being implemented, at least in part, by an application, component, and/or circuit. Although the following illustration refers to the components of FIGURES 4A-I, it can be appreciated that the operations of the routines may be also implemented in many other ways. For example, the routines may be implemented, at least in part, by a computer processor or a processor or processors of another computer. In addition, one or more of the operations of the routines may alternatively or additionally be implemented, at least in part, by a computer working alone or in conjunction with other software modules.

For example, the operations of routines are described herein as being implemented, at least in part, by an application, component and/or circuit, which are generically referred to herein as modules. In some configurations, the modules can be a dynamically linked library (DLL), a statically linked library, functionality produced by an application programing interface (API), a compiled program, an interpreted program, a script or any other executable set of instructions. Data and/or modules, such as the data and modules disclosed herein, can be stored in a data structure in one or more memory components. Data can be retrieved from the data structure by addressing links or references to the data structure.

Although the following illustration refers to the components of the FIGURES discussed above, it can be appreciated that the operations of the routines (e.g. processes 400, 420, 430, 480 and 490 of FIGURES 4A-I) may be also implemented in many other ways. For example, the routines may be implemented, at least in part, by a processor of another remote computer or a local computer or circuit. In addition, one or more of the operations of the routines may alternatively or additionally be implemented, at least in part, by a chipset working alone or in conjunction with other software modules. Any service, circuit or application suitable for providing the techniques disclosed herein can be used in operations described herein.

FIGURE 5 shows additional details of an example computer architecture 500 for a computer, such as the client devices 120 and services 130, 140 and 150 (FIGURES 1 and 2), capable of executing the program components described herein. Thus, the computer architecture 500 illustrated in FIGURE 5 illustrates an architecture for an on-board vehicle computer, a server computer, mobile phone, a PDA, a smart phone, a desktop computer, a netbook computer, a tablet computer, an on-board computer, a game console, and/or a laptop computer. The computer architecture 500 may be utilized to execute any aspects of the software components presented herein.

The computer architecture 500 illustrated in FIGURE 5 includes a central processing unit 502 ("CPU"), a system memory 504, including a random access memory 506 ("RAM") and a read-only memory ("ROM") 508, and a system bus 510 that couples the memory 504 to the CPU 502. A basic input/output system containing the basic routines that help to transfer information between sub-elements within the computer architecture 500, such as during startup, is stored in the ROM 508. The computer architecture 500 further includes a mass storage device 512 for storing an operating system 507, data (such as user models 520, user behavior data 522, user preference, interest and inventory data 524, user search, communication and social network data526 and consumption or wear profiles 528), and one or more application programs.

The mass storage device 512 is connected to the CPU 502 through a mass storage controller (not shown) connected to the bus 510. The mass storage device 512 and its associated computer-readable media provide non-volatile storage for the computer architecture 500. Although the description of computer-readable media contained herein refers to a mass storage device, such as a solid-state drive, a hard disk or CD-ROM drive, it should be appreciated by those skilled in the art that computer-readable media can be any available computer storage media or communication media that can be accessed by the computer architecture 500.

Communication media includes computer readable instructions, data structures, program modules, or other data in a modulated data signal such as a carrier wave or other transport mechanism and includes any delivery media. The term "modulated data signal" means a signal that has one or more of its characteristics changed or set in a manner so as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

By way of example, and not limitation, computer storage media may include volatile and non-volatile, removable and non-removable media implemented in any method or technology for storage of information such as computer-readable instructions, data structures, program modules or other data. For example, computer media includes, but is not limited to, RAM, ROM, EPROM, EEPROM, flash memory or other solid state memory technology, CD-ROM, digital versatile disks ("DVD"), HD-DVD, BLU-RAY, or other optical storage, magnetic cassettes, magnetic tape, magnetic disk storage or other magnetic storage devices, or any other medium which can be used to store the desired information and which can be accessed by the computer architecture 500. For purposes the claims, the phrase "computer storage medium," "computer-readable storage medium" and variations thereof, does not include waves, signals, and/or other transitory and/or intangible communication media, per se.

According to various configurations, the computer architecture 500 may operate in a networked environment using logical connections to remote computers through the network 556 and/or another network (not shown). The computer architecture 500 may connect to the network 556 through a network interface unit 514 connected to the bus 510. It should be appreciated that the network interface unit 514 also may be utilized to connect to other types of networks and remote computer systems. The computer architecture 500 also may include an input/output controller 516 for receiving and processing input from a number of other devices, including a keyboard, mouse, game controller, television remote or electronic stylus (not shown in FIGURE 5). Similarly, the input/output controller 516 may provide output to a display screen, a printer, or other type of output device (also not shown in FIGURE 5).

It should be appreciated that the software components described herein may, when loaded into the CPU 502 and executed, transform the CPU 502 and the overall computer architecture 500 from a general-purpose computing system into a special-purpose computing system customized to facilitate the functionality presented herein. The CPU 502 may be constructed from any number of transistors or other discrete circuit elements, which may individually or collectively assume any number of states. More specifically, the CPU 502 may operate as a finite-state machine, in response to executable instructions contained within the software modules disclosed herein. These computer-executable instructions may transform the CPU 502 by specifying how the CPU 502 transitions between states, thereby transforming the transistors or other discrete hardware elements constituting the CPU 502.

Encoding the software modules presented herein also may transform the physical structure of the computer-readable media presented herein. The specific transformation of physical structure may depend on various factors, in different implementations of this description. Examples of such factors may include, but are not limited to, the technology used to implement the computer-readable media, whether the computer-readable media is characterized as primary or secondary storage, and the like. For example, if the computer-readable media is implemented as semiconductor-based memory, the software disclosed herein may be encoded on the computer-readable media by transforming the physical state of the semiconductor memory. For example, the software may transform the state of transistors, capacitors, or other discrete circuit elements constituting the semiconductor memory. The software also may transform the physical state of such components in order to store data thereupon.

As another example, the computer-readable media disclosed herein may be implemented using magnetic or optical technology. In such implementations, the software presented herein may transform the physical state of magnetic or optical media, when the software is encoded therein. These transformations may include altering the magnetic characteristics of particular locations within given magnetic media. These transformations also may include altering the physical features or characteristics of particular locations within given optical media, to change the optical characteristics of those locations. Other transformations of physical media are possible without departing from the scope and spirit of the present description, with the foregoing examples provided only to facilitate this discussion.

In light of the above, it should be appreciated that many types of physical transformations take place in the computer architecture 500 in order to store and execute the software components presented herein. It also should be appreciated that the computer architecture 500 may include other types of computing devices, including hand-held computers, embedded computer systems, personal digital assistants, and other types of computing devices known to those skilled in the art. It is also contemplated that the computer architecture 500 may not include all of the components shown in FIGURE 5, may include other components that are not explicitly shown in FIGURE 5, or may utilize an architecture completely different than that shown in FIGURE 5.

FIGURE 6 depicts an illustrative distributed computing environment 600 capable of executing the software components described herein for predictive searching. Thus, the distributed computing environment 600 illustrated in FIGURE 6 can be utilized to execute many aspects of the software components presented herein. For example, the distributed computing environment 600 can be utilized to execute one or more aspects of the software components described herein.

According to various implementations, the distributed computing environment 600 includes a computing environment 602 operating on, in communication with, or as part of the network 604. The network 604 may be or may include the network 556, described above. The network 604 also can include various access networks. One or more client devices 606A-806N (hereinafter referred to collectively and/or generically as "clients 606") can communicate with the computing environment 602 via the network 604 and/or other connections (not illustrated in FIGURE 6). In one illustrated configuration, the clients 606 include a computing device 606A, such as a laptop computer, a desktop computer, or other computing device; a slate or tablet computing device ("tablet computing device") 606B; a mobile computing device 606C such as a mobile telephone, a smart phone, an on-board computer, or other mobile computing device; a server computer 606D; and/or other devices 606N, which can include a hardware security module. It should be understood that any number of devices 606 can communicate with the computing environment 602. Two example computing architectures for the devices 606 are illustrated and described herein with reference to FIGURES 5 and 7. It should be understood that the illustrated devices 606 and computing architectures illustrated and described herein are illustrative only and should not be construed as being limited in any way.

In the illustrated configuration, the computing environment 602 includes application servers 608, data storage 610, and one or more network interfaces 612. According to various implementations, the functionality of the application servers 608 can be provided by one or more server computers that are executing as part of, or in communication with, the network 604. The application servers 608 can host various services, virtual machines, portals, and/or other resources. In the illustrated configuration, the application servers 608 host one or more virtual machines 614 for hosting applications or other functionality. According to various implementations, the virtual machines 614 host one or more applications and/or software modules for automatic generation of predictions for items of interest. It should be understood that this configuration is illustrative only and should not be construed as being limiting in any way.

According to various implementations, the application servers 608 also include one or more user model services 620, query services 622, and transaction services 624. The user model services 620 can include services for modifying user models. The query services 622 can include services for generating search queries for items, submitting the search queries to eCommerce platforms, and receiving the query responses from the eCommerce platforms. The transactions services 624 can include services for executing purchase transactions for a user.

As shown in FIGURE 6, the application servers 608 also can host other services, applications, portals, and/or other resources ("other resources") 628. The other resources 628 can include, but are not limited to, data encryption, data sharing, or any other functionality.

As mentioned above, the computing environment 602 can include data storage 610. According to various implementations, the functionality of the data storage 610 is provided by one or more databases or data stores operating on, or in communication with, the network 604. The functionality of the data storage 610 also can be provided by one or more server computers configured to host data for the computing environment 602. The data storage 610 can include, host, or provide one or more real or virtual data stores 626A-826N (hereinafter referred to collectively and/or generically as "datastores 626"). The datastores 626 are configured to host data used or created by the application servers 608 and/or other data. Aspects of the datastores 626 may be associated with services for a automatic generation of predictions for items of interest. Although not illustrated in FIGURE 6, the datastores 626 also can host or store web page documents, word documents, presentation documents, data structures, algorithms for execution by a recommendation engine, and/or other data utilized by any application program or another module.

The computing environment 602 can communicate with, or be accessed by, the network interfaces 612. The network interfaces 612 can include various types of network hardware and software for supporting communications between two or more computing devices including, but not limited to, mobile client vehicles, the clients 606 and the application servers 608. It should be appreciated that the network interfaces 612 also may be utilized to connect to other types of networks and/or computer systems.

It should be understood that the distributed computing environment 600 described herein can provide any aspects of the software elements described herein with any number of virtual computing resources and/or other distributed computing functionality that can be configured to execute any aspects of the software components disclosed herein. According to various implementations of the concepts and technologies disclosed herein, the distributed computing environment 600 may provide the software functionality described herein as a service to the clients using devices 606. It should be understood that the devices 606 can include real or virtual machines including, but not limited to, server computers, web servers, personal computers, mobile computing devices, smart phones, and/or other devices, which can include user input devices. As such, various configurations of the concepts and technologies disclosed herein enable any device configured to access the distributed computing environment 600 to utilize the functionality described herein for automatic generation of predictions for items of interest, among other aspects.

Turning now to FIGURE 7, an illustrative computing device architecture 700 for a computing device that is capable of executing various software components is described herein for predictive searching. The computing device architecture 700 is applicable to computing devices such as mobile clients in vehicles. In some configurations, the computing devices include, but are not limited to, mobile telephones, on-board computers, tablet devices, slate devices, portable video game devices, traditional desktop computers, portable computers (e.g., laptops, notebooks, ultra-portables, and netbooks), server computers, game consoles, and other computer systems. The computing device architecture 700 is applicable to the client device 110 and client/servers 120A-C shown in FIGURES 1, 2A-C, and computing device 606A-N shown in FIGURE 6.

The computing device architecture 700 illustrated in FIGURE 7 includes a processor 702, memory components 704, network connectivity components 706, sensor components 708, input/output components 710, and power components 712. In the illustrated configuration, the processor 702 is in communication with the memory components 704, the network connectivity components 706, the sensor components 708, the input/output ("I/O") components 710, and the power components 712. Although no connections are shown between the individual components illustrated in FIGURE 7, the components can interact to carry out device functions. In some configurations, the components are arranged so as to communicate via one or more busses (not shown).

The processor 702 includes a central processing unit ("CPU") configured to process data, execute computer-executable instructions of one or more application programs, and communicate with other components of the computing device architecture 700 in order to perform various functionality described herein. The processor 702 may be utilized to execute aspects of the software components presented herein and, particularly, those that utilize, at least in part, secure data.

In some configurations, the processor 702 includes a graphics processing unit ("GPU") configured to accelerate operations performed by the CPU, including, but not limited to, operations performed by executing secure computing applications, general-purpose scientific and/or engineering computing applications, as well as graphics-intensive computing applications such as high resolution video (e.g., 720P, 1080P, and higher resolution), video games, three-dimensional ("3D") modeling applications, and the like. In some configurations, the processor 702 is configured to communicate with a discrete GPU (not shown). In any case, the CPU and GPU may be configured in accordance with a co-processing CPU/GPU computing model, wherein a sequential part of an application executes on the CPU and a computationally-intensive part is accelerated by the GPU.

In some configurations, the processor 702 is, or is included in, a system-on-chip ("SoC") along with one or more of the other components described herein below. For example, the SoC may include the processor 702, a GPU, one or more of the network connectivity components 706, and one or more of the sensor components 708. In some configurations, the processor 702 is fabricated, in part, utilizing a package-on-package ("PoP") integrated circuit packaging technique. The processor 702 may be a single core or multi-core processor.

The processor 702 may be created in accordance with an ARM architecture, available for license from ARM HOLDINGS of Cambridge, United Kingdom. Alternatively, the processor 702 may be created in accordance with an x86 architecture, such as is available from INTEL CORPORATION of Mountain View, California and others. In some configurations, the processor 702 is a SNAPDRAGON SoC, available from QUALCOMM of San Diego, California, a TEGRA SoC, available from NVIDIA of Santa Clara, California, a HUMMINGBIRD SoC, available from SAMSUNG of Seoul, South Korea, an Open Multimedia Application Platform ("OMAP") SoC, available from TEXAS INSTRUMENTS of Dallas, Texas, a customized version of any of the above SoCs, or a proprietary SoC.

The memory components 704 include a random access memory ("RAM") 714, a read-only memory ("ROM") 716, an integrated storage memory ("integrated storage") 718, and a removable storage memory ("removable storage") 720. In some configurations, the RAM 714 or a portion thereof, the ROM 716 or a portion thereof, and/or some combination of the RAM 714 and the ROM 716 is integrated in the processor 702. In some configurations, the ROM 716 is configured to store a firmware, an operating system or a portion thereof (e.g., operating system kernel), and/or a bootloader to load an operating system kernel from the integrated storage 718 and/or the removable storage 720.

The integrated storage 718 can include a solid-state memory, a hard disk, or a combination of solid-state memory and a hard disk. The integrated storage 718 may be soldered or otherwise connected to a logic board upon which the processor 702 and other components described herein also may be connected. As such, the integrated storage 718 is integrated in the computing device. The integrated storage 718 is configured to store an operating system or portions thereof, application programs, data, and other software components described herein.

The removable storage 720 can include a solid-state memory, a hard disk, or a combination of solid-state memory and a hard disk. In some configurations, the removable storage 720 is provided in lieu of the integrated storage 718. In other configurations, the removable storage 720 is provided as additional optional storage. In some configurations, the removable storage 720 is logically combined with the integrated storage 718 such that the total available storage is made available as a total combined storage capacity. In some configurations, the total combined capacity of the integrated storage 718 and the removable storage 720 is shown to a user instead of separate storage capacities for the integrated storage 718 and the removable storage 720.

The removable storage 720 is configured to be inserted into a removable storage memory slot (not shown) or other mechanism by which the removable storage 720 is inserted and secured to facilitate a connection over which the removable storage 720 can communicate with other components of the computing device, such as the processor 702. The removable storage 720 may be embodied in various memory card formats including, but not limited to, PC card, CompactFlash card, memory stick, secure digital ("SD"), miniSD, microSD, universal integrated circuit card ("UICC") (e.g., a subscriber identity module ("SIM") or universal SIM ("USIM")), a proprietary format, or the like.

It can be understood that one or more of the memory components 704 can store an operating system. According to various configurations, the operating system may include, but is not limited to, server operating systems such as various forms of UNIX certified by The Open Group and LINUX certified by the Free Software Foundation, or aspects of Software-as-a-Service (SaaS) architectures, such as MICROSFT AZURE from Microsoft Corporation of Redmond, Washington or AWS from Amazon Corporation of Seattle, Washington. The operating system may also include WINDOWS MOBILE OS from Microsoft Corporation of Redmond, Washington, WINDOWS PHONE OS from Microsoft Corporation, WINDOWS from Microsoft Corporation, MAC OS or IOS from Apple Inc. of Cupertino, California, and ANDROID OS from Google Inc. of Mountain View, California. Other operating systems are contemplated.

The network connectivity components 706 include a wireless wide area network component ("WWAN component") 722, a wireless local area network component ("WLAN component") 724, and a wireless personal area network component ("WPAN component") 726. The network connectivity components 706 facilitate communications to and from the network 756 or another network, which may be a WWAN, a WLAN, or a WPAN. Although only the network 756 is illustrated, the network connectivity components 706 may facilitate simultaneous communication with multiple networks, including the network 756 of FIGURE 7. For example, the network connectivity components 706 may facilitate simultaneous communications with multiple networks via one or more of a WWAN, a WLAN, or a WPAN.

The network 756 may be or may include a WWAN, such as a mobile telecommunications network utilizing one or more mobile telecommunications technologies to provide voice and/or data services to a computing device utilizing the computing device architecture 700 via the WWAN component 722. The mobile telecommunications technologies can include, but are not limited to, Global System for Mobile communications ("GSM"), Code Division Multiple Access ("CDMA") ONE, CDMA7000, Universal Mobile Telecommunications System ("UMTS"), Long Term Evolution ("LTE"), and Worldwide Interoperability for Microwave Access ("WiMAX"). Moreover, the network 756 may utilize various channel access methods (which may or may not be used by the aforementioned standards) including, but not limited to, Time Division Multiple Access ("TDMA"), Frequency Division Multiple Access ("FDMA"), CDMA, wideband CDMA ("W-CDMA"), Orthogonal Frequency Division Multiplexing ("OFDM"), Space Division Multiple Access ("SDMA"), and the like. Data communications may be provided using General Packet Radio Service ("GPRS"), Enhanced Data rates for Global Evolution ("EDGE"), the High-Speed Packet Access ("HSPA") protocol family including High-Speed Downlink Packet Access ("HSDPA"), Enhanced Uplink ("EUL") or otherwise termed High-Speed Uplink Packet Access ("HSUPA"), Evolved HSPA ("HSPA+"), LTE, and various other current and future wireless data access standards. The network 756 may be configured to provide voice and/or data communications with any combination of the above technologies. The network 756 may be configured to or be adapted to provide voice and/or data communications in accordance with future generation technologies.

In some configurations, the WWAN component 722 is configured to provide dual- multi-mode connectivity to the network 756. For example, the WWAN component 722 may be configured to provide connectivity to the network 756, wherein the network 756 provides service via GSM and UMTS technologies, or via some other combination of technologies. Alternatively, multiple WWAN components 722 may be utilized to perform such functionality, and/or provide additional functionality to support other non-compatible technologies (i.e., incapable of being supported by a single WWAN component). The WWAN component 722 may facilitate similar connectivity to multiple networks (e.g., a UMTS network and an LTE network).

The network 756 may be a WLAN operating in accordance with one or more Institute of Electrical and Electronic Engineers ("IEEE") 602.11 standards, such as IEEE 602.11a, 602.11b, 602.11g, 602.11n, and/or future 602.11 standard (referred to herein collectively as WI-FI). Draft 602.11 standards are also contemplated. In some configurations, the WLAN is implemented utilizing one or more wireless WI-FI access points. In some configurations, one or more of the wireless WI-FI access points are another computing device with connectivity to a WWAN that are functioning as a WI-FI hotspot. The WLAN component 724 is configured to connect to the network 756 via the WI-FI access points. Such connections may be secured via various encryption technologies including, but not limited to, WI-FI Protected Access ("WPA"), WPA2, Wired Equivalent Privacy ("WEP"), and the like.

The network 756 may be a WPAN operating in accordance with Infrared Data Association ("IrDA"), BLUETOOTH, wireless Universal Serial Bus ("USB"), Z-Wave, ZIGBEE, or some other short-range wireless technology. In some configurations, the WPAN component 726 is configured to facilitate communications with other devices, such as peripherals, computers, or other computing devices via the WPAN.

The sensor components 708 include a magnetometer 728, an ambient light sensor 730, a proximity sensor 732, an accelerometer 734, a gyroscope 736, and a Global Positioning System sensor ("GPS sensor") 738. It is contemplated that other sensors, such as, but not limited to, temperature sensors or shock detection sensors, also may be incorporated in the computing device architecture 700.

The I/O components 710 include a display 740, a touchscreen 742, a data I/O interface component ("data I/O") 744, an audio I/O interface component ("audio I/O") 746, a video I/O interface component ("video I/O") 748, and a camera 750. In some configurations, the display 740 and the touchscreen 742 are combined. In some configurations two or more of the data I/O component 744, the audio I/O component 746, and the video I/O component 748 are combined. The I/O components 710 may include discrete processors configured to support the various interfaces described below or may include processing functionality built-in to the processor 702.

The illustrated power components 712 include one or more batteries 752, which can be connected to a battery gauge 754. The batteries 752 may be rechargeable or disposable. Rechargeable battery types include, but are not limited to, lithium polymer, lithium ion, nickel cadmium, and nickel metal hydride. Each of the batteries 752 may be made of one or more cells.

The power components 712 may also include a power connector, which may be combined with one or more of the aforementioned I/O components 710. The power components 712 may interface with an external power system or charging equipment via an I/O component.

In closing, although the various configurations have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

The present disclosure is made in light of the following clauses:
Clause 1. A computer-implemented method for automatic generation of predictions for items of interest to a user, the method comprising:
   obtaining historical user behavior data, predictive data and status data; applying a first user model to the historical user behavior data, predictive data and status data to predict a first item of interest to the user; generating a first set of search requests pertaining to the first predicted item; submitting each of the first set of search requests to one of a plurality of electronic commerce platforms; receiving a first set of search results responsive to the first set of search requests pertaining to the first predicted item; and selecting at least one of the first set of received search results for the first predicted item.
Clause 2. The method of Clause 1, where: the predictive data includes an item wear profile corresponding to an item; and the step of applying a first user model to the historical user behavior data, predictive data and status data to predict a first item of interest to the user comprises applying the first user model to the historical user behavior data and the item wear profile to predict the first item of interest to the user.
Clause 3. The method of Clause 1, wherein: the status data includes user preference data; and the step of generating the first set of search requests pertaining to the predicted item comprises generating a first set of search requests pertaining to the predicted item based on one or more parameters from the user preference data.
Clause 4. The method of Clause 3, where: the user preference data includes a user authorization to automatically to purchase the predicted item; and the method includes: searching the user preference data for the user authorization to automatically purchase the predicted item; and if the user authorization to automatically purchase the predicted item is founds, automatically committing a purchase transaction for the selected one of the search results for the predicted item.
Clause 5. The method of Clause 1, where: the step of obtaining historical user behavior data, predictive data and status data includes obtaining search data and social network data for the user; and the step of applying a first user model to the historical user behavior data, predictive data and status data to predict a first item of interest to the user comprises applying a first user model to the historical user behavior data, search data and social network data to predict a first item of interest to the user.
Clause 6. The method of Clause 5, where: the step of obtaining historical user behavior data, predictive data and status data includes obtaining inventory data for the user and the step includes generating a style graph based on a plurality of the historical user behavior data, the inventory data, search data and social network data; and the step of applying a first user model to the historical user behavior data, predictive data and status data to predict a first item of interest to the user comprises: applying a first user model to the style graph and the plurality of the historical user behavior data, the inventory data, search data and social network data to predict a first item of interest to the user.
Clause 7. The method of Clause 1, where the method includes: the step of selecting at least one of the first set of received search results for the first predicted item comprises selecting one or more of the first set of received search results for the first predicted item; providing for display on a user client the selected one or more of the first set of received search results for the first predicted item; receiving a user selection of one of the selected one or more of the first set of received search results; and committing a purchase transaction for the user selected one of the first set of search results for the first predicted item.
Clause 8. The method of Clause 7, where the method includes: modifying the first user model based on one or more of received user selection, user feedback, and updated historical user behavior data.
Clause 9. The method of Clause 1, where: the first user model comprises a first type of user model; andthe method includes: applying a second user model comprising a second type of user model to the historical user behavior data, predictive data and status data to predict a second item of interest to the user; generating a second set of search requests pertaining to the second predicted item; submitting each of the second set of search requests to one of the plurality of electronic commerce platforms; receiving a second set of search results responsive to the second set of search requests; and selecting at least one of the second set of received search results for the second predicted item.
Clause 10. Computer storage media having computer executable instructions stored thereon which, when executed by one or more processors, cause the processors to execute a method for automatic generation of predictions for items of interest to a user, the method comprising: obtaining historical user behavior data, predictive data and status data; applying a first user model to the historical user behavior data, predictive data and status data to predict a first item of interest to the user; generating a first set of search requests pertaining to the first predicted item; submitting each of the first set of search requests to one of a plurality of electronic commerce platforms; receiving a first set of search results responsive to the first set of search requests pertaining to the first predicted item; and selecting at least one of the first set of received search results for the first predicted item.
Clause 11. The computer readable media of Clause 10, where: the predictive data includes an item wear profile corresponding to an item; and the step of applying a first user model to the historical user behavior data, predictive data and status data to predict a first item of interest to the user comprises applying the first user model to the historical user behavior data and the item wear profile to predict the first item of interest to the user.
Clause 12. The computer readable media of Clause 10, wherein: the status data includes user preference data; and the step of generating the first set of search requests pertaining to the predicted item comprises generating a first set of search requests pertaining to the predicted item based on one or more parameters from the user preference data.
Clause 13. The computer readable media of Clause 12, where: the user preference data includes a user authorization to automatically to purchase the predicted item; and the method includes: searching the user preference data for the user authorization to automatically purchase the predicted item; and if the user authorization to automatically purchase the predicted item is founds, automatically committing a purchase transaction for the selected one of the search results for the predicted item.
Clause 14. The computer readable media of Clause 10, where: the step of obtaining historical user behavior data, predictive data and status data includes obtaining search data and social network data for the user; and the step of applying a first user model to the historical user behavior data, predictive data and status data to predict a first item of interest to the user comprises applying a first user model to the historical user behavior data, search data and social network data to predict a first item of interest to the user.
Clause 15. The computer readable media of Clause 14, where: the step of obtaining historical user behavior data, predictive data and status data includes obtaining inventory data for the user and the step includes generating a style graph based on a plurality of the historical user behavior data, the inventory data, search data and social network data; and the step of applying a first user model to the historical user behavior data, predictive data and status data to predict a first item of interest to the user comprises: applying a first user model to the style graph and the plurality of the historical user behavior data, the inventory data, search data and social network data to predict a first item of interest to the user.
Clause 16. The computer readable media of Clause 10, where the method includes: the step of selecting at least one of the first set of received search results for the first predicted item comprises selecting one or more of the first set of received search results for the first predicted item; providing for display on a user client the selected one or more of the first set of received search results for the first predicted item; receiving a user selection of one of the selected one or more of the first set of received search results; and committing a purchase transaction for the user selected one of the first set of search results for the first predicted item.
Clause 17. The computer readable media of Clause 16, where the method includes: modifying the first user model based on one or more of received user selection, user feedback, and updated historical user behavior data.
Clause 18. The computer readable media of Clause 10, where: the first user model comprises a first type of user model; and the method includes: applying a second user model comprising a second type of user model to the historical user behavior data, predictive data and status data to predict a second item of interest to the user; generating a second set of search requests pertaining to the second predicted item; submitting each of the second set of search requests to one of the plurality of electronic commerce platforms; receiving a second set of search results responsive to the second set of search requests; and selecting at least one of the second set of received search results for the second predicted item.
Clause 19. A system for automatically generating predictions for items of interest to a user, the system comprising: one or more processors; and one or more memory devices in communication with the one or more processors, the memory devices having computer-readable instructions stored thereupon that, when executed by the processors, cause the processors to: obtain historical user behavior data, predictive data, status data and social network data; apply a first user model to the user behavior data, predictive data, status data and social network data to predict a first item of interest to the user; generate a first set of search requests pertaining to the first predicted item; submit each of the first set of search requests to one of a plurality of electronic commerce platforms; receive a first set of search results responsive to the first set of search requests pertaining to the first predicted item; select one or more of the first set of received search results for the first predicted item; provide for display on a user client the selected one or more of the first set of received search results for the first predicted item; receive a user selection of one of the selected one or more of the first set of received search results; and commit a purchase transaction for the user selected one of the first set of search results for the first predicted item.
Clause 20. The system of Clause 19, where the first user model comprises a first type of user model and the system further includes stored instructions that, when executed by the processors, cause the processors to: apply a second user model comprising a second type of user model to at least two of the user behavior data, predictive data, status data and social network data to predict a second item of interest to the user; generate a second set of search requests pertaining to the second predicted item; submit each of the second set of search requests to one of the plurality of electronic commerce platforms; receive a second set of search results responsive to the second set of search requests; select one or more of the second set of received search results for the second predicted item; provide for display on a user client the selected one or more of the second set of received search results for the second predicted item; receive a user selection of one of the selected one or more of the second set of received search results; and commit a purchase transaction for the user selected one of the second set of received search results for the second predicted item.

Although the subject matter presented herein has been described in language specific to computer structural features, methodological and transformative acts, specific computing machinery, and computer readable media, it is to be understood that the subject matter set forth in the appended claims is not necessarily limited to the specific features, acts, or media described herein. Rather, the specific features, acts and mediums are disclosed as example forms of implementing the claimed subject matter.

The subject matter described above is provided by way of illustration only and should not be construed as limiting. Various modifications and changes can be made to the subject matter described herein without following the example configurations and applications illustrated and described, and without departing from the scope of the present disclosure, which is set forth in the following claims

## Claims

1. A computer-implemented method for automatic generation of predictions for items of interest to a user, the method comprising:
obtaining historical user behavior data, predictive data and status data;
applying a first user model to the historical user behavior data, predictive data and status data to predict a first item of interest to the user;
generating a first set of search requests pertaining to the first predicted item;
submitting each of the first set of search requests to one of a plurality of electronic commerce platforms;
receiving a first set of search results responsive to the first set of search requests pertaining to the first predicted item; and
selecting at least one of the first set of received search results for the first predicted item.

2. The method of Claim 1, where:
the predictive data includes an item wear profile corresponding to an item; and
the step of applying a first user model to the historical user behavior data, predictive data and status data to predict a first item of interest to the user comprises applying the first user model to the historical user behavior data and the item wear profile to predict the first item of interest to the user.

3. The method of Claim 1 or 2, wherein:
the status data includes user preference data; and
the step of generating the first set of search requests pertaining to the predicted item comprises generating a first set of search requests pertaining to the predicted item based on one or more parameters from the user preference data,
wherein, optionally,
the user preference data includes a user authorization to automatically to purchase the predicted item; and
the method optionally further includes:
searching the user preference data for the user authorization to automatically purchase the predicted item; and
if the user authorization to automatically purchase the predicted item is founds,
automatically committing a purchase transaction for the selected one of the search results for the predicted item.

4. The method of Claim 1, where:
the step of obtaining historical user behavior data, predictive data and status data includes obtaining search data and social network data for the user; and
the step of applying a first user model to the historical user behavior data, predictive data and status data to predict a first item of interest to the user comprises applying a first user model to the historical user behavior data, search data and social network data to predict a first item of interest to the user,
wherein, optionally,
the step of obtaining historical user behavior data, predictive data and status data includes obtaining inventory data for the user and the step includes generating a style graph based on a plurality of the historical user behavior data, the inventory data, search data and social network data; and
the step of applying a first user model to the historical user behavior data, predictive data and status data to predict a first item of interest to the user optionally further comprises:
applying a first user model to the style graph and the plurality of the historical user behavior data, the inventory data, search data and social network data to predict a first item of interest to the user.

5. The method of any one of the preceding Claims, where the method includes:
the step of selecting at least one of the first set of received search results for the first predicted item comprises selecting one or more of the first set of received search results for the first predicted item;
providing for display on a user client the selected one or more of the first set of received search results for the first predicted item;
receiving a user selection of one of the selected one or more of the first set of received search results; and
committing a purchase transaction for the user selected one of the first set of search results for the first predicted item,
where the method optionally further includes:
modifying the first user model based on one or more of received user selection, user feedback, and updated historical user behavior data.

6. The method of any one of the preceding Claims, where:
the first user model comprises a first type of user model; and
the method includes:
applying a second user model comprising a second type of user model to the historical user behavior data, predictive data and status data to predict a second item of interest to the user;
generating a second set of search requests pertaining to the second predicted item;
submitting each of the second set of search requests to one of the plurality of electronic commerce platforms;
receiving a second set of search results responsive to the second set of search requests; and
selecting at least one of the second set of received search results for the second predicted item.

7. Computer storage media having computer executable instructions stored thereon which, when executed by one or more processors, cause the processors to execute a method for automatic generation of predictions for items of interest to a user, the method comprising:
obtaining historical user behavior data, predictive data and status data;
applying a first user model to the historical user behavior data, predictive data and status data to predict a first item of interest to the user;
generating a first set of search requests pertaining to the first predicted item;
submitting each of the first set of search requests to one of a plurality of electronic commerce platforms;
receiving a first set of search results responsive to the first set of search requests pertaining to the first predicted item; and
selecting at least one of the first set of received search results for the first predicted item.

8. The computer readable media of Claim 7, where:
the predictive data includes an item wear profile corresponding to an item; and
the step of applying a first user model to the historical user behavior data, predictive data and status data to predict a first item of interest to the user comprises applying the first user model to the historical user behavior data and the item wear profile to predict the first item of interest to the user.

9. The computer readable media of Claim 7 or 8, wherein:
the status data includes user preference data; and
the step of generating the first set of search requests pertaining to the predicted item comprises generating a first set of search requests pertaining to the predicted item based on one or more parameters from the user preference data,
wherein, optionally,
the user preference data includes a user authorization to automatically to purchase the predicted item; and
the method optionally further includes:
searching the user preference data for the user authorization to automatically purchase the predicted item; and
if the user authorization to automatically purchase the predicted item is founds,
automatically committing a purchase transaction for the selected one of the search results for the predicted item.

10. The computer readable media of Claim 7, where:
the step of obtaining historical user behavior data, predictive data and status data includes obtaining search data and social network data for the user; and
the step of applying a first user model to the historical user behavior data, predictive data and status data to predict a first item of interest to the user comprises applying a first user model to the historical user behavior data, search data and social network data to predict a first item of interest to the user,
wherein, optionally,
the step of obtaining historical user behavior data, predictive data and status data includes obtaining inventory data for the user and the step includes generating a style graph based on a plurality of the historical user behavior data, the inventory data, search data and social network data; and
the step of applying a first user model to the historical user behavior data, predictive data and status data to predict a first item of interest to the user optionally further comprises:
applying a first user model to the style graph and the plurality of the historical user behavior data, the inventory data, search data and social network data to predict a first item of interest to the user.

11. The computer readable media of any one of Claims 7 to 10, where the method includes:
the step of selecting at least one of the first set of received search results for the first predicted item comprises selecting one or more of the first set of received search results for the first predicted item;
providing for display on a user client the selected one or more of the first set of received search results for the first predicted item;
receiving a user selection of one of the selected one or more of the first set of received search results; and
committing a purchase transaction for the user selected one of the first set of search results for the first predicted item.

12. The computer readable media of Claim 11, where the method includes:
modifying the first user model based on one or more of received user selection, user feedback, and updated historical user behavior data.

13. The computer readable media of any one of Claims 7 to 12, where:
the first user model comprises a first type of user model; and
the method includes:
applying a second user model comprising a second type of user model to the historical user behavior data, predictive data and status data to predict a second item of interest to the user;
generating a second set of search requests pertaining to the second predicted item;
submitting each of the second set of search requests to one of the plurality of electronic commerce platforms;
receiving a second set of search results responsive to the second set of search requests; and
selecting at least one of the second set of received search results for the second predicted item.

14. A system for automatically generating predictions for items of interest to a user, the system comprising:
one or more processors; and
one or more memory devices in communication with the one or more processors, the memory devices having computer-readable instructions stored thereupon that, when executed by the processors, cause the processors to:
obtain historical user behavior data, predictive data, status data and social network data;
apply a first user model to the user behavior data, predictive data, status data and social network data to predict a first item of interest to the user;
generate a first set of search requests pertaining to the first predicted item;
submit each of the first set of search requests to one of a plurality of electronic commerce platforms;
receive a first set of search results responsive to the first set of search requests pertaining to the first predicted item;
select one or more of the first set of received search results for the first predicted item;
provide for display on a user client the selected one or more of the first set of received search results for the first predicted item;
receive a user selection of one of the selected one or more of the first set of received search results; and
commit a purchase transaction for the user selected one of the first set of search results for the first predicted item.

15. The system of Claim 14, where the first user model comprises a first type of user model and the system further includes stored instructions that, when executed by the processors, cause the processors to:
apply a second user model comprising a second type of user model to at least two of the user behavior data, predictive data, status data and social network data to predict a second item of interest to the user;
generate a second set of search requests pertaining to the second predicted item;
submit each of the second set of search requests to one of the plurality of electronic commerce platforms;
receive a second set of search results responsive to the second set of search requests;
select one or more of the second set of received search results for the second predicted item;
provide for display on a user client the selected one or more of the second set of received search results for the second predicted item;
receive a user selection of one of the selected one or more of the second set of received search results; and
commit a purchase transaction for the user selected one of the second set of received search results for the second predicted item.
